# EUROPÄISCHE PATENTSCHRIFT

(11) **EP 3 988 281 B1**
(45) Veröffentlichungstag und Bekanntmachung des Hinweises auf die Patenterteilung: **18.01.2023**
(21) Anmeldenummer: 21194569.6
(22) Anmeldetag: 02.09.2021
(51) Int. Cl.: B29C 55/06

(54) **LÄNGSRECKWERK SOWIE VERFAHREN ZUM AUSTAUSCH EINER EINEM VERSCHLEISS AUSGESETZTEN BAUEINHEIT IN EINEM LÄNGSRECKWERK**
LONGITUDINAL STRETCHING UNIT AND METHOD FOR REPLACING A UNIT WHICH IS SUBJECTED TO WEAR IN A LONGITUDINAL STRETCHING UNIT
BANC LONGITUDINAL D'ÉTIRAGE, AINSI QUE PROCÉDÉ DE REMPLACEMENT D'UN COMPOSANT SUJET À L'USURE DANS UN BANC LONGITUDINAL D'ÉTIRAGE

(30) Priorität: 22.10.2020 DE 102020127803
(43) Veröffentlichungstag der Anmeldung: 27.04.2022
(73) Patentinhaber: Brückner Maschinenbau GmbH & Co. KG, 83313 Siegsdorf (DE)
(72) Erfinder: EDFELDER, Anton, 83246 Unterwössen (DE); KREITMAIR, Jakob, 83313 Siegsdorf (DE); WINKLER, Felix, 83059 Kolbermoor (DE); GIAPOULIS, Anthimos, 83278 Traunstein (DE)
(74) Vertreter: Flach Bauer & Partner Patentanwälte mbB

(56) Entgegenhaltungen:
- WO-A2-2015/128467
- DE-A1- 1 404 397

## Beschreibung

Die Erfindung betrifft ein Längsreckwerk nach dem Oberbegriff des Anspruches 1 sowie ein Verfahren zum Austausch einer einem Verschleiß ausgesetzten Baueinheit in einem Längsreckwerk.

Bei einem Kunststofffolien-Längsreckwerk wird eine Längsreckung eines Films zwischen aufeinanderfolgenden Walzen durchgeführt, wobei jeweils eine nachfolgende Walze mit höherer Rotationsgeschwindigkeit oder Umlaufgeschwindigkeit dreht, als eine vorausgegangene Walze. Dadurch kommt es zu einer Längsstreckung des Films im Spalt zwischen diesen beiden aufeinanderfolgenden Walzen. Eine sequenzielle Reckanlage für Kunststofffilme mit einem zugehörigen Längsreckwerk ist beispielsweise aus der WO 2015/128467 A2 bekannt geworden. Derartige Längsreckwerke umfassen üblicherweise auch eine Heiz- oder Vorheizstation, um den zu reckenden Film auf die gewünschte Bearbeitungstemperatur zu bringen. Dabei ist ferner zu berücksichtigen, dass die verwendeten Walzen in dem Längsreckwerk auch einer ständigen Beanspruchung ausgesetzt sind, so dass sie nach entsprechenden Zeiten demontiert und durch andere oder neue Walzen ersetzt werden müssen.

Um ein sauberes Anliegen des Films an der jeweiligen Prozess- oder Umlenkwalze zu garantieren, werden die erwähnten Anpress- oder Nipwalzen verwendet, um die bewegte Materialbahn, insbesondere einen zu reckenden Kunststofffolienfilm, vollflächig auf den Mantel einer Umlenk- oder Prozesswalze anzudrücken.

Diese Folie wird dann in weiteren Arbeitsschritten weiter durch das Längsreckwerk oder die Längsreckanlage hindurchgeführt. Das Längsreckwerk kann dabei auch Teil einer sequenziellen Reckanlage sein, in der der Film zunächst in Längsrichtung und in einer nachfolgenden Stufe dann in Breitenrichtung oder umgekehrt erst in Breitenrichtung und anschließend in Längsrichtung gereckt wird.

Bei der Reckung in Längsrichtung wird die zu reckende Folie, um diese auf entsprechende Recktemperatur zu bringen, über beheizte Walzen geführt und dadurch erwärmt. Durch die erwähnte höhere Walzengeschwindigkeit einer jeweils nachfolgenden Walze wird dann die Längsreckung bewirkt, also in der sogenannten Längsreckrichtung, die auch kurz als MD-Richtung abgekürzt wird.

Die in einem derartigen Längsreckwerk beispielsweise in Form einer Längsreckanlage vorgesehenen Bauteile, insbesondere die dort vorgesehenen Prozesswalzen und/oder Anpresswalzen unterliegen jedoch einem nicht zu vernachlässigenden Verschleiß. Vor allem die Oberflächen derartiger Walzen unterliegen einer Abnutzung, die die Güte und Qualität des zu reckenden Kunststofffolienfilms nachteilig beeinflussen können. Von daher müssen derartige Bauteile und insbesondere Walzen, d.h. Prozesswalzen und/oder Anpresswalzen ausgewechselt werden, wenn sie verschlissen sind.

Je komplizierter oder aufwendiger die Einbausituation oder der konkrete Befestigungsmechanismus (beispielsweise die Art der Lagerung von Walzen) ist, umso aufwendiger und komplizierter wird der Ausbau der auszuwechselnden und der Einbau der neu einzusetzenden Bauteile, insbesondere der erwähnten Walzen.

Besonders kompliziert wird der Ausbau der erwähnten Bauteile/Walzen vor allem dann, wenn die zu tauschenden Bauteile, d.h. wiederum die erwähnten Walzen mit benachbarten Baugruppen und Bauteilen verbunden sind, beispielsweise durch die vorgesehene Beheizung der Walzen und die dafür vorgesehene Verrohrung und die Drehdurchführungen am Dichtkopf etc.). Die Komplexität des Gesamtsystems erhöht sich auch noch dadurch, dass die entsprechenden Walzen mit Motoren und/oder Getrieben und /oder Kupplungen und/oder Gelenkwellen verbunden sind, die alle zum Ausbau des alten Bauteils gelöst und nach Einfügung der neuen Bauteile und insbesondere der neu einzusetzenden Walzen wiederum montiert, angeschlossen und befestigt werden müssen.

Noch komplizierter wird es dann, wenn angrenzende Baugruppen in bestimmter Ausrichtung zu den auszuwechselnden Einheiten platziert werden müssen. Dies gilt beispielsweise dann, wenn an einer betreffenden Stelle, an der beispielsweise ein Bauteil/eine Walze oder eine Walzenanordnung ausgewechselt werden soll, nämlich exakt zwischen einer in Abzugsrichtung des Kunststofffolienfilms vorausgehenden sowie einer dazu nachfolgenden Walze als Walzenanordnung.

Die im Stand der Technik insoweit gegebenen Nachteile lassen sich wie folgt kurz zusammenfassen:
- der Ausbau der zu tauschenden Bauteile/Walzen ist sehr aufwendig und zeitintensiv;
- das Trennen der auszuwechselnden Bauteile von den vorhandenen Anschlüssen für die Pneumatik, für die Heizeinrichtungen, insbesondere in Form von Heizwasserleitungen (über die bis zu 130°C heißes Wasser geführt wird) sowie für die elektrischen Anschlussleitungen, ist ebenfalls aufwendig und zeitintensiv;
- aufwendig gestaltet sich dann aber auch das erneute Verbinden der in Rede stehenden Bauteile beim Einbau, insbesondere auch wiederum der Anschluss der Heizwasserleitungen, die wieder befüllt und entlüftet werden müssen (um sie bei der Montage von der eingeschlossenen Luft zu befreien), sowie der Anschluss der pneumatischen und elektrischen Leitungen;
- ferner müssen Einrichtvorgänge in dem Längsreckwerk oder der Längsreckanlage durchgeführt werden, um die einzubauenden neuen Bauteile bzw. Walzen zu den in Abzugsrichtung vorausgehend angeordneten Walzen als auch zu den nachfolgend eingebauten Bauteilen oder Walzen exakt zu justieren (dies gilt zum Beispiel insbesondere bezüglich der Parallelität von zusammenwirkenden Walzen wie beispielsweise einer Prozesswalze und einer Anpresswalze);
- schließlich müssen Funktionstests vor dem Wiederanfahren der Anlage durchgeführt werden, um zu überprüfen, ob alle Leitungen richtig angeschlossen und verbunden wurden.

Vor diesem Hintergrund ist es Aufgabe der vorliegenden Erfindung, eine verbesserte Längsreckanlage oder ein verbessertes Längsreckwerk zum einen und ein verbessertes Verfahren zum anderen zu schaffen, welches es ermöglicht, dass Bauteile und insbesondere Walzen derartiger Anlagen schneller und unkomplizierter gewechselt, also ausgetauscht werden können.

Die Aufgabe wird bezüglich der Vorrichtung entsprechend den im Anspruch 1 und bezüglich des Verfahrens entsprechend den im Anspruch 13 angegebenen Merkmalen gelöst. Vorteilhafte Ausgestaltungen der Erfindung sind in den Unteransprüchen angegeben.

Durch die erfindungsgemäße Lösung ist ein einfacher und vor allem unkomplizierter Wechsel von auszutauschenden Bauteilen und insbesondere Walzen möglich. Dies gilt insbesondere auch für ungeschultes Personal. Denn der erfindungsgemäße Aufbau ist so gestaltet, dass er auch ohne lange Einweisungen durchführbar ist, und zwar aufgrund seines bevorzugt fast selbsterklärenden Aufbaus und damit der fast selbsterklärenden impliziten Funktionsweise.

Im Rahmen der Erfindung ergibt sich dabei eine deutliche Zeitersparnis beim Wechseln der in Rede stehenden Bauteile, und zwar durch die gute Zugänglichkeit, die definierten Arbeitsschritte und der bevorzugt eindeutigen Schnittstellen.

Letztlich werden dadurch aber auch kürzere Anlagenstillstandzeiten möglich, verbunden mit geringeren Produktionsverlusten. All diese Eigenschaften wiegen umso schwerer, je häufiger entsprechende Einheiten oder Bauteile verschleißbedingt gewechselt werden müssen.

Die erfindungsgemäße Lösung zeichnet sich insbesondere dadurch aus, dass eine auszuwechselnde Austauscheinheit direkt auf dem Längsreckwerk oder der Längsreckanlage positioniert wird. Dazu ist bevorzugt ein Gestell oder Gestellabschnitt vorgesehen, welches bzw. welcher auf der Längsreckanlage vorgesehen ist, auf welcher wiederum die Austauscheinheit bereitgehalten wird.

Diese Positionierung der Austauscheinheit erfolgt bevorzugt oberhalb der Vorheizzone, d.h. den Vorheizwalzen. Dies bietet die Möglichkeit, dass die dort entstehende Abwärme genutzt werden kann, damit die Austauscheinheit beispielsweise innerhalb von ein bis zwei Tagen auf die gewünschte Temperatur auf- bzw. vorgeheizt ist.

In einer bevorzugten Ausführungsform der Erfindung wird das Heizsystem der Walzen in der Längsreckanlage benutzt, um durch eine einfache Heizungsverrohrung die Austauscheinheit schon während der Bereitstellungsphase auf die gewünschte Betriebstemperatur aufzuheizen.

In einer alternativen Lösung der Erfindung ist es sogar möglich, die Austauscheinheit neben einer Längsreckanlage oder einem Längsreckwerk zu positionieren. In diesem Falle reicht allerdings die von der Anlage produzierte Abwärme nicht, um die Austauscheinheit insgesamt auf die gewünschte Betriebstemperatur zu bringen bzw. auf eine gewünschte Betriebstemperatur vorzuhalten. In diesem Falle ist deshalb vorgesehen, dass die seitlich oder benachbarte zur Längsreckanlage vorgesehene Austauscheinheit mit dem Heizsystem verbunden ist, welches für die Erwärmung der Heizwalzen in der Längsreckanlage vorgesehen ist. Mit anderen Worten ist eine einfach gestaltete Heizungsverrohrung ausreichend, um die seitlich oder benachbarte zur Längsreckanlage positioniert der Austauscheinheit beispielsweise mit Heißwasser zu versorgen und auf die gewünschte Betriebstemperatur aufzuheizen.

Im Falle eines Austausches von Bauteilen oder Baueinheiten können diese im Rahmen der Erfindung einfach und schnell aus der Längsreckanlage ausgebaut und durch die bereitgehaltene und schon auf Betriebstemperatur vorerwärmte Austauscheinheit ersetzt werden.

Die auszuwechselnden Bauteile oder Baueinheiten sind dabei als Modul oder Steckmodul (Cartridge) ausgebildet.

Diese Module oder Steckmodule weisen dabei bevorzugt ferner eine Positioniereinrichtung auf, die es erlaubt, dass die Austauscheinheit mit dem zugehörigen Gestell oder Modulrahmen präzise und passgenau in der Längsreckanlage platziert werden kann. Bevorzugt weist dabei diese Positioniereinrichtung eine Kompensationsmöglichkeit für eine eventuelle Wärmeausdehnung zwischen dem Gestell des Moduls (Modulrahmen) und dem Gestell oder Tragrahmen der Längsreckanlage auf.

Dieses Positioniersystem kann beispielsweise an der einen Stirnseite eine kegelförmliche Konstruktion und an der gegenüberliegenden Stirnseite eine quer und insbesondere senkrecht zur Längsrichtung der Anlage ausgerichtete Konstruktion zum Beispiel in Form eines Trapezes aufweisen. Dieses Positionierungssystem, welches beispielhaft als "Kegel" bzw. "Trapez" bezeichnet wird, sorgt letztlich für eine exakte Positionierung in Längsrichtung der Reckanlage (MDO-Richtung) und erlaubt einen Temperaturausgleich zwischen beiden Gestellen, d.h. zwischen dem Gestell der Austauscheinheit (also dem Modul) und dem maschinenseitigen Gestell der Reckanlage, vergleichbar einem Festlager an der einen Stirnseite und einem Loslager an der anderen Stirnseite des auszuwechselnden Bauteils oder der auszuwechselnden Walzen.

Um den gesamten Prozess des Auswechselns weiter zu verbessern, ist bevorzugt auf der Längsreckanlage noch eine Zwischenposition oder ein Zwischen-Abstellplatz vorgesehen, auf welchem die zunächst ausgebauten und zu ersetzenden Baueinheiten zwischengelagert werden können. Diese Zwischenposition ist bevorzugt so auf der Längsreckanlage angeordnet, dass der Platz für die in Betriebsstellung eingebaute Baueinheit zwischen den Bereitstellungsplatz und der Zwischenposition zu liegen kommt.

Insgesamt ist einer Weiterbildung der Erfindung auch vorgesehen, dass die Schnittstellen zum Anschluss der Heizleitungen, der pneumatischen Leitungen und/oder der elektrischen Leitungen als eindeutig definierte oder codierte Anschlüsse, Stecker und/oder Schnellkupplungen ausgebildet sind, die ein schnelles Demontieren und Montieren ermöglichen.

Mit anderen Worten sind also die in Rede stehenden Module mit den Austauscheinheiten mit Schnellwechselsystemen ausgestattet, die ein Einfaches, sicheres und schnelles Ein- und Ausbauen der Module ermöglicht.

Zusammenfassend kann festgehalten werden, dass es im Rahmen der Erfindung möglich wird, beispielsweise mehrere als Modul zusammengefasste Reckwalzen innerhalb weniger Stunden (beispielsweise innerhalb von 1-2 Stunden) auszutauschen. Normalerweise würde solch ein Wechsel mindestens die doppelte Zeit erfordern, wobei bei der Lösung nach dem Stand der Technik erschwerend noch hinzukommt, dass nach dem Auswechseln und Einbauen einer Austauscheinheit in ihre Betriebsposition dann zusätzlich noch die die zugehörigen Walzen auf Betriebstemperatur erwärmt werden müssen, wodurch nochmals ein Zeitraum von mindestens ein bis zwei Stunden vergehen kann.

Die Erfindung wird nachfolgend anhand von Zeichnungen näher erläutert. Dabei zeigen im Einzelnen
- Figur 1a bis 1c:: drei schematische Seitenansichten eines Längsreckwerk oder einer Längsreckanlage zum Recken eines Kunststofffilms, bei der zur besseren Darstellung Zwischenabschnitte ausgelassen und nicht dargestellt sind;
- Figur 2:: eine Baueinheit mit zwei Heizwalzen und zwei Anpresswalzen, die unter Bildung eines Moduls oder Steckmoduls (Cartridge) in einem zugehörigen Gestell eingebaut sind;
- Figur 3:: eine Querschnittsdarstellung senkrecht durch die Längsachsen der in Figur 2 gezeigten Walzen;
- Figur 4:: eine Stirnseitenansicht auf die Ausführungsform nach Figur 3 unter Weglassung der dort zusätzlich vorgesehenen Schnellkupplungen für die Beheizung;
- Figur 5:: eine auszugsweise vergrößerte Detaildarstellung der einen Stirnseite des Moduls mit einem Kegelförmigen Positioniersystem (bevorzugt auf der Antriebsseite der Reckanlage);
- Figur 6:: eine entsprechende vergrößerte Detailansicht der gegenüberliegenden Stirnseite des Moduls mit einem eine axiale Ausgleichsbewegung in axialer Längsrichtung der Walzen erlaubenden Positioniersystem vorzugsweise in Trapezform; und
- Figur 7:: ein weiteres erfindungsgemäßes Ausführungsbeispiel in Draufsicht.

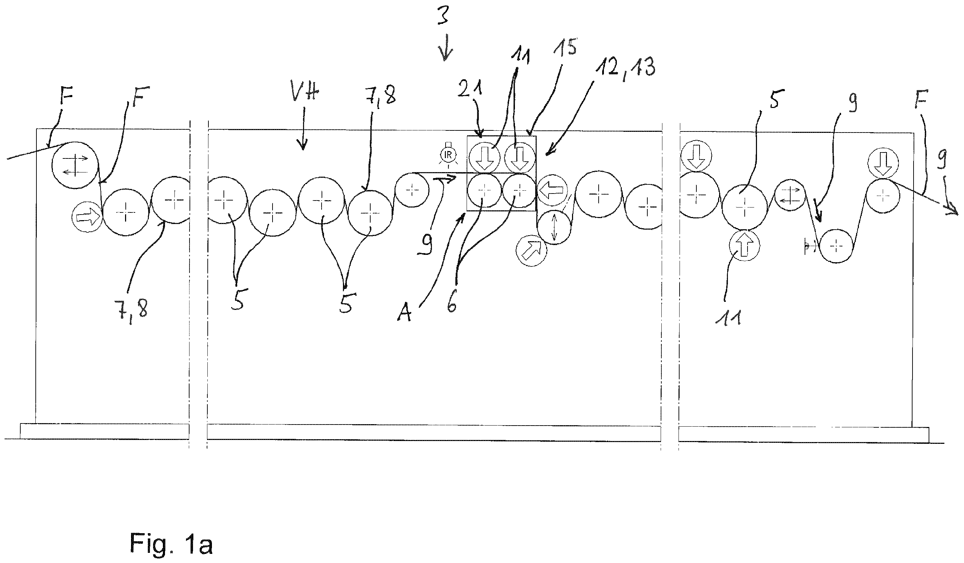

In Figur 1a ist in schematischer Seitenansicht eine Längsreckanlage 3 mit einer Vielzahl von Walzen 5 gezeigt, die nachfolgend auch als Umlenk- und/oder Prozesswalzen bezeichnet werden. Anstelle von einer Längsreckanlage 3 kann ebenso auch von einem Längsreckwerk 3 oder einer Längsreckmaschine 3 gesprochen werden.

Bei der Darstellung gemäß Figur 1a ist üblicherweise linksliegend, also eingangsseitig ein Extruder zur Aufbereitung des Kunststofffolien-Filmmaterials vorgesehen, welcher eine Schmelze in der Regel über eine Breitschlitzdüse auf eine in einem Wasserbad rotierende Kühlwalze abgibt. Es könnte aber auch gar kein Wasserbad vorhanden sein. Ferner ist aber auch ein Bad mit einer beliebigen Kühlflüssigkeit (z.B. Lösemittel, oder jegliche Gemische) möglich. Beschränkungen auf eine bestimmte Kühlmethode bestehen insoweit also nicht.

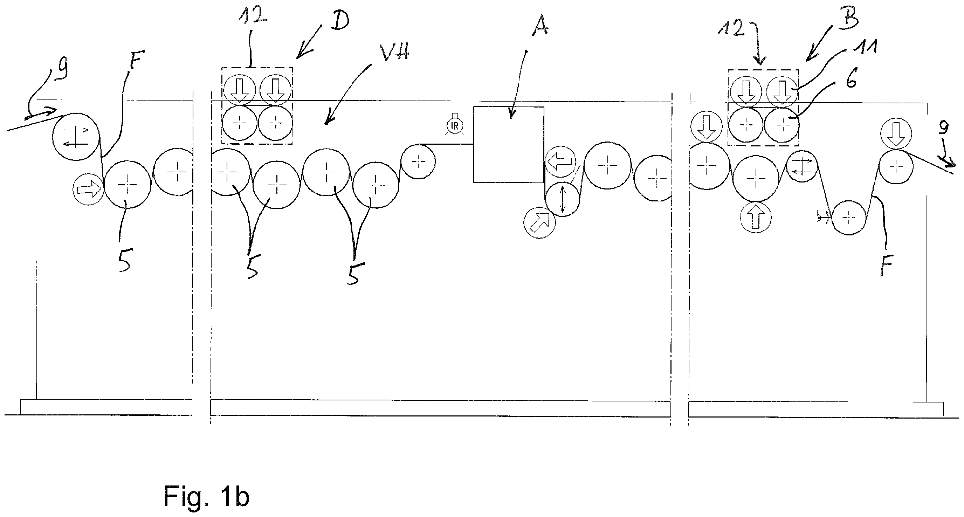

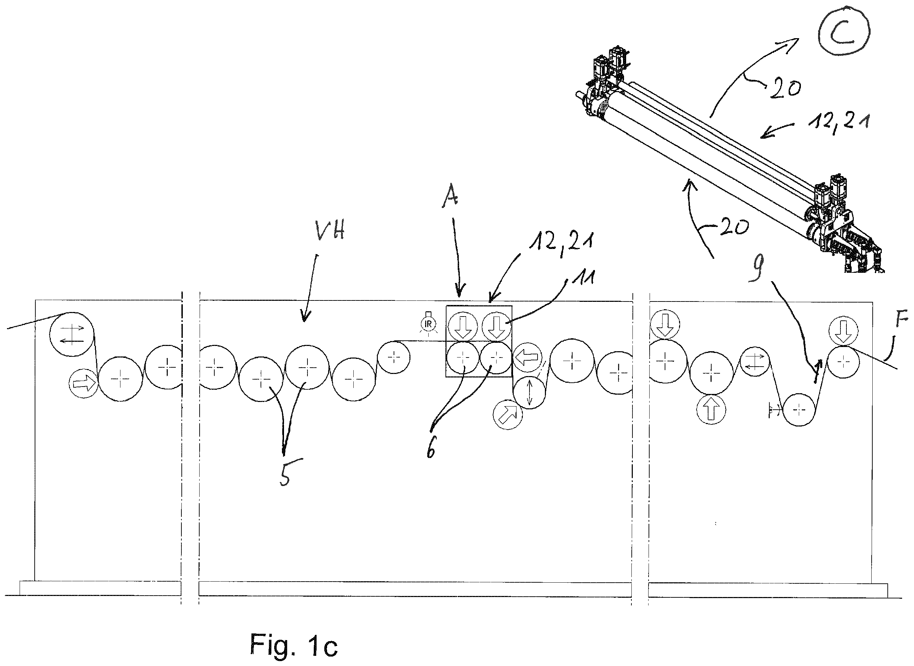

Der in der Regel dadurch verfestigte und/oder auskristallisierte Film F wird dann in Figur 1 linksliegend der Längsreckanlage 3 zugeführt und verläuft dann mäanderförmig über eine Vielzahl von Walzen 5 einer Vorheizstufe VH hinweg, bevor er das Längsreckwerk rechtsliegend in Figur 1 verlässt. Der Film F wird dort - wenn er noch in Querrichtung ergänzend gereckt werden soll - dann einem Querreckwerk (TDO) zugeführt. Es wird insoweit wie bei der Erzeugung des Schmelzfilms auf die vorbekannten Einrichtungen und Anlagen verwiesen.

In dem Längsreckwerk verläuft der Film F jeweils in einem Teilumschlingungswinkel um die erwähnten Walzen 5 herum, wobei er in diesem Umschlingungswinkel dann auf der entsprechenden Walzenoberfläche 7 bzw. den Walzenmantel 8 aufliegt, um mit entsprechender Mantel-Umlaufgeschwindigkeit fortbewegt zu werden.

Die einzelnen Walzen 5 werden dabei auf die jeweils optimale Temperatur erwärmt, um den Film selbst auf optimale Recktemperatur zu bringen und diese zu erhalten.

Bei dem Verfahren muss sichergestellt werden, dass der Film gleichmäßig und ohne Einschlüsse von Luft auf die Walzen, d.h. die Walzenoberfläche 7 bzw. den Walzenmantel 8 der Walzen 5 aufgelegt bzw. angelegt wird.

Dafür können in dem Längsreckwerk 3 eine Vielzahl von Anpresswalzen 11 vorgesehen sein, die teilweise auch als Nipwalzen oder Niprollen bezeichnet werden.

Zwischen zwei aufeinanderfolgenden Walzen kann jeweils ein Längsrecken dadurch bewirkt werden, dass eine in Abzugsrichtung 9 nachfolgende Walze gegenüber einer vorausgegangenen Walze mit höherer Mantelumlaufgeschwindigkeit angetrieben wird, so dass in dem freien Abschnitt zwischen zwei aufeinander folgenden Walzen dann die Längsreckung der durch die Anlage hindurch bewegten Materialbahn bewirkt wird.

Bei der Darstellung gemäß Figur 1a ist an der Position A eine derartige Reckstufe 13 mit zwei Reckwalzen 6 und zwei Anpresswalzen 11 gezeigt. Diese Einheit bildet ein Modul oder Steckmodul 12, welches neben den Walzen 6 und 11 u.a. noch ein Gestell oder einen Modulrahmen 15 umfasst.

Wie aus der Seitendarstellung gemäß Figur 1b zu ersehen ist, ist in Abzugsrichtung 9 des Kunststofffilms F vorgelagert an einer Position D eine Bereithaltungsstation 19. An dieser Bereithaltungsstation 19 ist ein entsprechendes Modul 12 bereitgestellt, also quasi geparkt.

Bei dem Modul 12 handelt es sich um ein Bauteil oder eine Baueinheit 21, die beispielsweise einem größeren Verschleiß unterliegt. Im gezeigten Ausführungsbeispiel wiesen nach einer bestimmten Betriebsdauer die Oberflächen der Walzen 6 und 11 in dem Modul 12 aufgrund der dort gebildeten Reckstufe Spuren einer höheren Beanspruchung auf.

Soll das erwähnte Modul 12 aufgrund des stattgefundenen Verschleißes aus dem Längsreckwerk entfernt und durch ein anderes Modul ersetzt werden, so müssen nur die entsprechenden nachfolgend erläuterten Schnellverschlüsse und Schnellkupplungen gelöst und das betreffende Modul an seiner Position A (Fig. 1a und 1b) aus seiner Einbauposition entfernt werden.

Das ausgebaute Modul 12 wird anschließend beispielsweise in eine Zwischenposition B oberhalb der Anlage gestellt, die beispielsweise in Abzugsrichtung der Einbauposition A des auszuwechselnden Moduls nachgelagert ist. Dies ist in Fig. 1b dargestellt. Das ausgebaute Modul hinterlässt einen leeren Platz an der Position A. Nachdem ein Verschleißspuren aufweisendes und deshalb auszuwechselndes Modul 12 ausgebaut und z.B. in die Zwischenparkposition B verbracht wurde, kann dann das in Abzugsrichtung vorgelagerte und oberhalb der Längsreckanlage in Position D bereitgeschaltete Modul 12 in seine Einbauposition A verbracht und dort angeschlossen werden, indem die dortigen entsprechenden Schnellkupplungen und Schnellanschlüsse angeschlossen werden.

Die Besonderheit im genannten Fall ist, dass das mit frischen und unabgenutzten Walzenoberflächen versehene Modul nicht irgendwo bereitgehalten wird, sondern oberhalb (bzw. innerhalb) der Vorheizzone. Besonders bevorzugt ist die Bereithaltung des für einen Austausch bereitstehenden Moduls oberhalb der Vorheizwalzen. Dies eröffnet nämlich die Möglichkeit, dass das in der Bereithaltungsposition 19 befindliche neue beispielsweise mit frischen und unabgenutzten Walzenoberflächen versehene Modul bereits durch die in der Vorheizzone entstehende Abwärme so vorgeheizt ist, dass nach dem Einbau des Moduls 12 in der Einbauposition A keine weitere Aufheizphase für die Komponenten in dem Modul 12 mehr notwendig ist.

Bevorzugt ist jedoch das Modul 12 in seiner Bereithaltungsposition 19 ebenfalls mit vorzugsweise vorgesehenen Schnellkupplung an das für die Reckanlage vorgesehene Beheizungssystem angeschlossen. Mit anderen Worten wird also die für die Walzen 5 in der Vorheizzone VH vorgesehene Einrichtung mitbenutzt, um das in der Bereitstellungsposition befindliche Modul 12 vorzuhalten. Dies kann einfach durch eine Heizungsverrohrung erfolgen, die von den für die Aufheizung der Walzen 5 in der Vorheizzone VH vorgesehene Heizungsrohre ausgeht und zu den aufzuheizenden Walzen 6 führt.

In der Regel nach Durchführung des Austausches eines an der Position A befindlichen Moduls 12 durch Ersatz des zunächst an der Bereitstellungsposition D, 19 befindlichen Moduls 12 wird das zuvor ausgebaute Modul 12 in einer Zwischenposition B oder Zwischenstation B zwischengelagert oder zwischengeparkt. Insbesondere dann, wenn die Bereitstellungsposition D, 19 in Abzugsrichtung 9 des Films F vor der Einbauposition A liegt, befindet sich die zwischen Position oder Zwischenstation D in Abzugsrichtung 9 des Films F nach der Einbauposition A. Später kann dann das Modul 12 entnommen und an anderer Stelle C für eine Wiederverwendung neu aufbereitet und vorbereitet werden. Dies ist in Figur 1c mittels der Pfeile 20 abstrakt angedeutet.

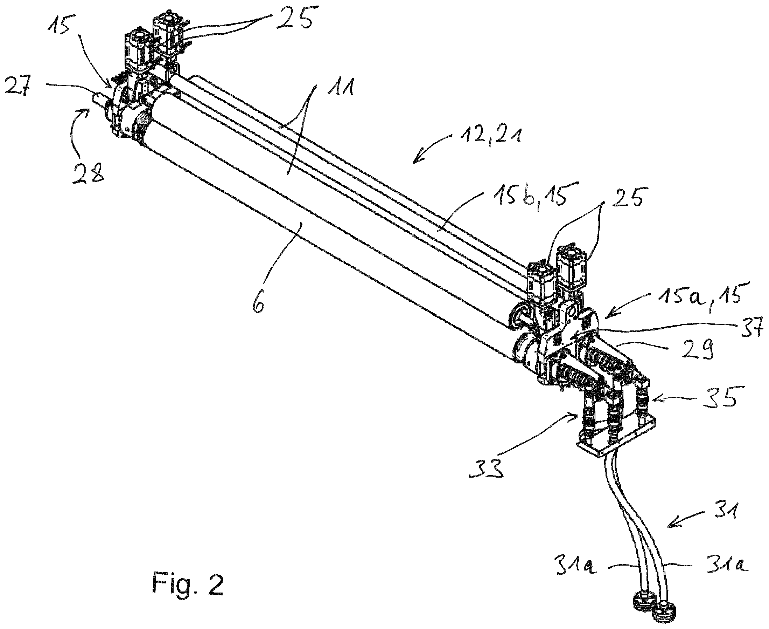

Anhand der Figuren 2 bis 4 ist der weitere Aufbau eines beispielhaft gezeigten und als Verschleißteil auszuwechselnden Moduls 12 gezeigt.

Im gezeigten Ausführungsbeispiel umfasst das Modul 12 die beiden erwähnten Heizwalzen 6, die jeweils mit Anpresswalzen 11 zusammenarbeiten. Die beiden jeweils miteinander in Kontakt stehenden Walzenpaare 6 und 11 sind in einem Modulrahmen 15 eingebaut und gehalten. Der Modulrahmen 15 umfasst dabei die beiden stirnseitig vorgesehenen Modulrahmen-Endstücke 15a, die über eine oberhalb der Anpresswalzen 11 liegende, z.B. stangen- oder brückenförmige obere Verbindung 15b und eine unterhalb der Reckwalzen 6 liegende ebenfalls z.B. stangen- oder brückenförmige untere Verbindung 15c unter Bildung des Modulrahmens 15 fest miteinander verbunden sind. Die Walzen 6 umfassen eine bei Verschleiß auszuwechselnde Funktionsoberfläche. Die Anpresswalzen 11 sind beispielsweise mit einer kombinierten Walzenoberfläche versehen , die ebenfalls einem Verschleiß unterliegen kann. Ferner sind noch Pneumatik-Zylinder 25 für eine Walzenverstellung vorgesehen.

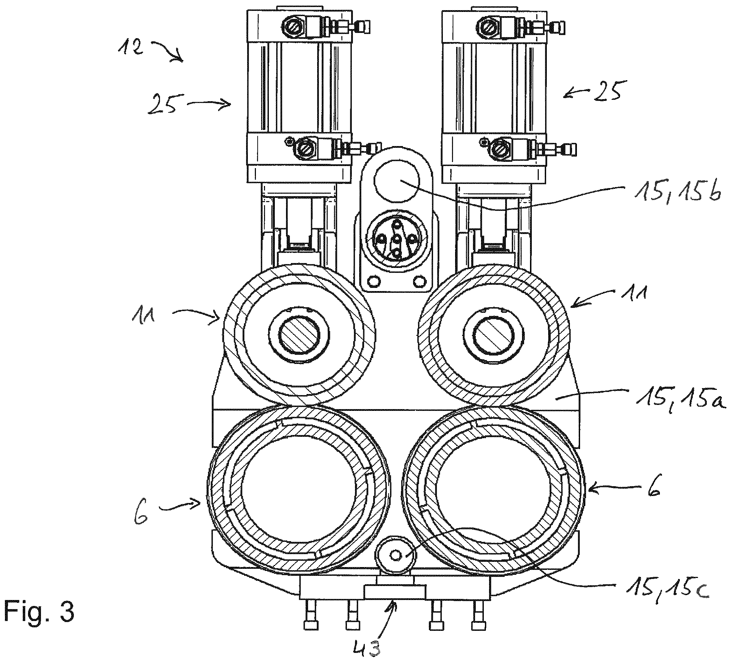

Insbesondere aus Figur 2 ist zu ersehen, dass an der abgewandten Stirnseite des Moduls 12 ein Spannsatz 28 für einen Gelenkwellenanschluss 27 zum Antrieb der Heizwalzen 6 vorgesehen ist. An der gegenüberliegenden und in Figur 3 somit vorne liegenden Stirnseite sind Durchführungen 29 (insbesondere Drehdurchführungen 29) für die beiden Walzen 6 vorgesehen, die eine für die Walzenheizung benötigte Verrohung 31 in Form von zwei Heizleitungen 31a umfassen.

An der gleichen Seite sind Schnellkupplungen 35 vorgesehen, die im gezeigten Ausführungsbeispiel die erwähnten Drehdurchführungen 29 und ihren anschließenden, nach unten weisenden Anschlussstutzen 33 mit der Verrohung 31 verbinden. Diese Anschlüsse sind für die Beheizung vorgesehen.

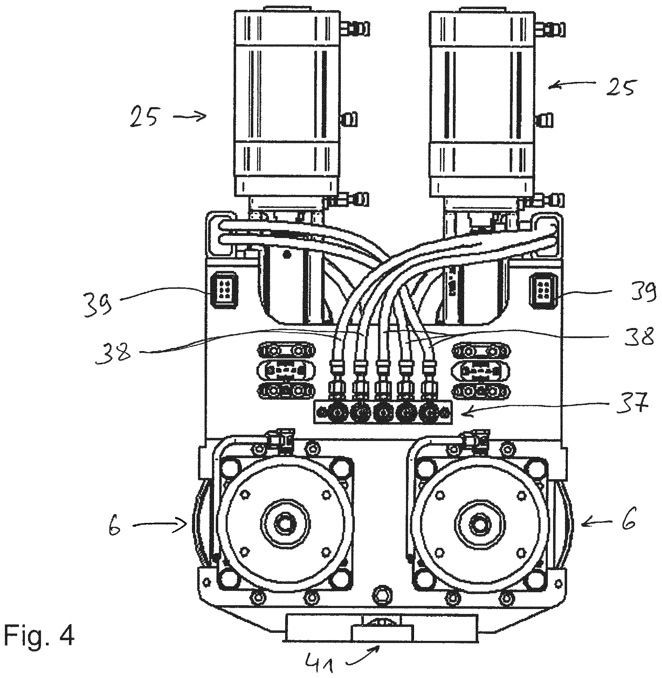

Aus der Seitenansicht gemäß Figur 4 ist zudem die Schnittstelle 37 für die pneumatischen Komponenten zu ersehen, die ebenfalls mit Schnellkupplungen angeschlossen oder entfernt werden können. Dabei sind im gezeigten Ausführungsbeispiel fünf pneumatische Anschlüsse 37 vorhanden, von denen fünf Pneumatikleitungen 38 (Figur 4) zu den im Modul 12 enthaltenen Druckzylindern weiterführen. Die Anzahl von fünf Pneumatikleitungen ist nur beispielhaft genannt, es können auch mehr oder weniger Pneumatikleitungen sein.

Daneben sind noch die Schnittstellen 39 für die elektrischen Anschlüsse angedeutet. Links und rechts neben den Schnittstellen 37 für die pneumatischen Komponenten sind noch die die Einstellmechanismen für die Anpresswalzen gezeigt.

Bevorzugt sind alle Anschlüsse, also insbesondere die elektrischen Anschlüsse, die pneumatischen Anschlüsse wie aber auch die Heizanschlüsse in Form von Schnellverschlüssen oder sogenannten Schnellkupplungen ausgebildet, um entsprechende Leitungen schnell anschließen und wieder lösen zu können. Derartige Anschlüsse sind im Stand der Technik hinlänglich und vielfach in unterschiedlichen Ausgestaltungen bekannt.

Soll nach dem Ausbau eines zu ersetzenden Moduls 12 ein an der Bereithalteposition 19 bereitgehaltenes Modul 12 an der Betriebsposition A eingesetzt werden, so kann das gesamte Modul 12 mit dem Gestell oder Modulrahmen 15, worüber die Walzen 6 und 11 und die pneumatischen Zylinder 25 gehalten sind, in die Betriebsposition A verbracht und dort eingebaut werden.

Um hier einen passgenauen Einbau auf einfache Art und Weise zu ermöglichen, ist beispielsweise an der einen Stirnseite ein kegelförmliches Positioniersystem 41 und an der gegenüberliegenden Stirnseite an entsprechender Stelle ein eine relative Längenveränderung in Axialrichtung in der Walze erlaubendes transversales Positioniersystem 43 vorgesehen, also quer oder senkrecht zur Abzugsrichtung 9 des Films F. Dadurch ergibt sich beim Aufsetzen des Modulrahmens an der Einbauposition A eine automatische Selbstjustierung des Moduls 12 gegenüber dem Maschinenrahmen 15 der Reckanlage. Das kegelförmliche Positioniersystem ist bevorzugt an der Antriebsseite der Reckanlage und das transversale Positioniersystem ist vorzugsweise an der gegenüberliegenden Bedienseite vorgesehen.

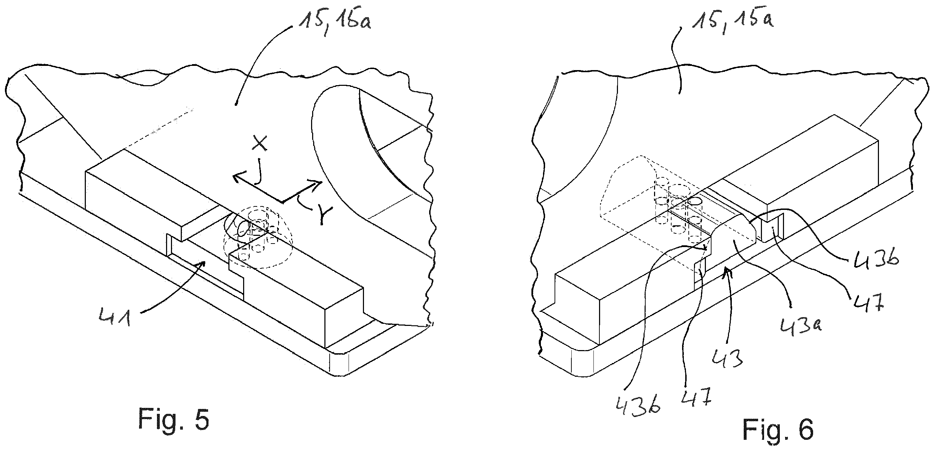

Durch das kegelförmige Positioniersystem 41 (siehe auch Figur 5) kann der Modulrahmen 15 bzw. die Modulrahmen-Endstücke 15a um die die Kegelform durchsetzende Zentralachse (senkrecht zur Ebene des Kunststofffilms) eine winkelförmige Ausgleichsbewegung durchführen. Primäres Ziel dieser Variante ist dabei jedoch, den Modulrahmen 15 leichter aufsetzen und dabei in X- und Y-Richtung an der Festseite fixieren zu können.

Durch das bevorzugt eine transversale Längenänderung erlaubende Positioniersystem 43 an der gegenüberliegenden Stirnseite ist ein bevorzugt senkrecht zur Abzugsrichtung 9 des Films F verlaufender Längenausgleich zwischen dem Gestell 15 des Modulrahmens und dem Maschinengestell möglich, also dem Gestell der Reckanlage.

Im gezeigten Ausführungsbeispiel ist das eine Längen-Ausgleichsbewegung erlaubende transversale Positioniersystem so trapezförmig gestaltet, dass das Trapezelement 43a mit zwei aufeinander zulaufenden Flanken 43b mit zwei in Abzugsrichtung des Films beanstandeten Seitenstegen 47 oder Vorsprüngen 47 zusammenwirkt. Beim Aufsetzen des Modulrahmens 15 laufen also die Seitenstege 47 an der ein oder anderen trapezförmigen Seitenflanke 43b des Positionierelementes 43a auf, sodass in der Endposition des trapezförmig Positionselement 43a möglichst oder fast spielfrei zwischen den beiden Seitenstegen oder -begrenzungen 47 sitzt. Die trapezförmige Gestaltung dient auch hier dem leichteren Aufsetzen und Ausrichten des Modulrahmens 15. Bevorzugt ist dabei das trapezförmige Positionierelement 43a wie auch der Positionierkegel 41a auf dem Maschinenrahmen, also den Reckanlagen-Rahmen fest angebracht. Die dazu jeweils am Modulrahmen 15 ausgebildeten Gegenstücke beispielsweise in Form eines Hohlzylinders oder in Form der Seitenstege 47 sind an der Unterseite des Modulrahmens 15 ausgebildet sind. Die entsprechenden Positionier-Elemente und die damit zusammenwirkenden Gegenstücke können auch umgekehrt am um Modulrahmen 15 bzw. am Maschinenrahmen ausgebildet sein.

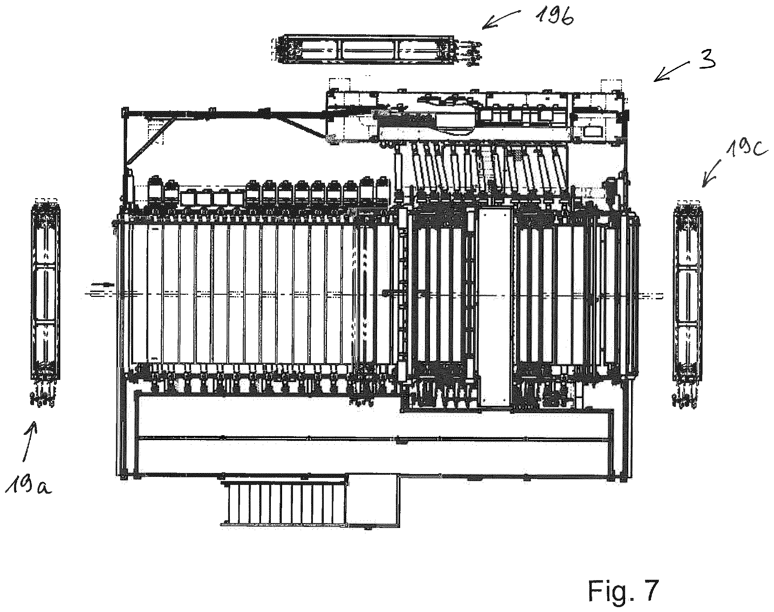

In einer alternativen Lösung der Erfindung ist es sogar möglich, die Austauscheinheit neben einer Längsreckanlage oder einem Längsreckwerk zu positionieren. Dies ist in Figur 7angedeutet,

In Figur 7 ist eine auszugsweise Draufsicht auf eine Längsreckanlage gezeigt, bei der der Film von links nach rechts hindurchbewegt wird. Eine Bereithaltestation 19 zum Vorheizen eines zum Austausch bereitstehenden Moduls 12 kann wie mit Bezugszeichen 19a, 19b bzw. 19c dargestellt z.B. vor, neben oder in Abzugsrichtung der Folie hinter der Anlage vorgesehen sein. Möglich wäre auch eine Position auf der zu 19b gegenüberliegenden Operator-Seite.

Bei einer derartigen Positionierung der Bereithaltestation 19 und eines hier bereit gehaltenen Moduls 12 reicht allerdings die von der Anlage produzierte Abwärme nicht, um die Austauscheinheit insgesamt auf die gewünschte Betriebstemperatur zu bringen bzw. auf eine gewünschte Betriebstemperatur vorzuhalten. In diesem Falle ist deshalb vorgesehen, dass diese seitlich oder benachbarte zur Längsreckanlage vorgesehene Austauscheinheit 12 bevorzugt mit dem Heizsystem verbunden ist, welches für die Erwärmung der Heizwalzen in der Längsreckanlage vorgesehen ist, also insbesondere mit den in der Vorheizzone VH vorgesehenen Heizwalzen 5. Mit anderen Worten ist eine einfach gestaltete Heizungsverrohrung ausreichend, um die z.B. seitlich oder allgemein benachbarte zur Längsreckanlage positionierte Austauscheinheit beispielsweise mit Heißwasser zu versorgen und auf die gewünschte Betriebstemperatur aufzuheizen. Die Beheizung neben der Längsreckmaschine kann natürlich auch durch ein separates Heizaggregat erfolgen.

## Patentansprüche

1. Längsreckwerk, insbesondere zum Längsrecken eines Kunststofffilms mit folgenden Merkmalen:
- das Längsreckwerk umfasst eine Vielzahl von in Abzugsrichtung (9) eines Kunststofffilms (F) nebeneinander angeordnete Walzen (5),
- mehrere der Walzen (5) sind Teil einer Vorheizstation (V),
- das Längsreckwerk umfasst ferner zumindest eine einem Verschleiß ausgesetzte Baueinheit (21),
- die Baueinheit (21) ist in dem Längsreckwerk auswechselbar angeordnet und dazu demontierbar und durch eine andere Baueinheit (21) ersetzbar,
**gekennzeichnet durch** die folgenden weiteren Merkmale:
- das Längsreckwerk umfasst neben der Einbau- oder Betriebsposition (A) für die auszuwechselnde Baueinheit (21) noch eine Bereithalteposition (D) und/oder Bereithaltungsstation (19), an der eine weitere Baueinheit (21) bereitgehalten ist, und
- die Bereithaltungsposition (D) und/oder die Bereithaltungsstation (19) ist so in Bezug auf das Längsreckwerk angeordnet und/oder ausgestaltet, dass die an dieser Bereithalteposition (D) und/oder Bereithaltungsstation (19) bereitgestellte weitere Baueinheit (21) schon vor dem Einbau an der Betriebsposition (A) auf Betriebstemperatur oder zumindest auf eine Vorwärmtemperatur gebracht oder bringbar ist, die höher oder um weniger als 30°C niedriger ist als die Betriebstemperatur.

2. Längsreckwerk nach Anspruch 1, **dadurch gekennzeichnet, dass** die Bereithalteposition (D) und/oder die Bereithaltungsstation (19) auf dem Längsreckwerk vorgesehen ist, und zwar in einem Bereich, der höher liegt als die Walzen (5), vorzugsweise im Bereich der Vorheizzone (V).

3. Längsreckwerk nach Anspruch 1 oder 2, **dadurch gekennzeichnet, dass** die Bereithalteposition (D) und/oder die Bereithaltungsstation (19) in der Vorheizstation (VH) oberhalb der hier vorgesehenen aufgeheizten Walzen (5) vorgesehen ist.

4. Längsreckwerk nach Anspruch 1, **dadurch gekennzeichnet, dass** die Bereithalteposition (D) und/oder die Bereithaltungsstation (19) für eine nächste zu verwendende Baueinheit (21) seitlich zu dem Längsreckwerk vorgesehen ist, und dass die bereitgestellte Baueinheit (21) über eine Heizungsverrohrung mit dem Aufheiz-Rohrsystem für die Aufheizung der Walzen (5) in der Vorheizzone (V) verbunden und daran angeschlossen ist.

5. Längsreckwerk nach Anspruch 1,2 oder 3, **dadurch gekennzeichnet, dass** die oberhalb des Längsreckwerks in der Bereithalteposition (D) und/oder der Bereithaltungsstation (19) bereitgestellte Baueinheit (21) über eine Heizungsverrohrung mit dem Aufheiz-Rohrsystem für die Aufheizung der Walzen (5) in der Vorheizzone (V) verbunden und daran angeschlossen ist

6. Längsreckwerk nach einem der Ansprüche 1 bis 5, **dadurch gekennzeichnet, dass** neben oder zusätzlich zu der Betriebsposition (A) und der Bereithaltungsposition (D) eine Zwischenparkposition (B) vorgesehen ist, in welcher eine zunächst in der Betriebsposition (A) befindliche und dann ausgebaute Baueinheit (21) zwischenpositionierbar ist.

7. Längsreckwerk nach Anspruch 6, **dadurch gekennzeichnet, dass** die Zwischenparkposition (D) oberhalb des Längsreckwerks vorgesehen ist, und zwar
a) bezogen auf die Abzugsrichtung (9) des Kunststofffilms (F) in einer zu der Betriebsposition (A) nachgeordnet Position, wenn die Bereitstellungsposition (D) zu der Betriebsposition (A) bezogen auf die Abzugsrichtung (9) des Kunststofffilms (F) vorlaufend angeordnet ist, oder
b) bezogen auf die Abzugsrichtung (9) des Kunststofffilms (F) in einer zu der Betriebsposition (A) vorgelagerten Position, wenn die Bereitstellungsposition (D) zu der Betriebsposition (A) bezogen auf die Abzugsrichtung (9) des Kunststofffilms (F) nachgelagert angeordnet ist.

8. Längsreckwerk nach einem der Ansprüche 1 bis 7, **dadurch gekennzeichnet, dass** die Baueinheit (21) einen Modulrahmen (15) umfasst, der mittels eines Positioniersystems (41, 43) in dem Längsreckwerk zumindest in der Betriebsposition (A) und/oder an der Bereitstellungsposition (D) und/oder der Zwischenparkposition (B) positionierbar ist.

9. Längsreckwerk nach Anspruch 8, **dadurch gekennzeichnet, dass** das Positioniersystem (41) an einer der beiden Stirnseiten des Modulrahmens (15) so ausgebildet ist, dass der Modulrahmen (15) zumindest in einem Teilwinkel um eine senkrecht zur Abzugsebene des Kunststofffilms (F) ausgerichtete Achse verschwenkbar ist, und dass das an der gegenüberliegenden Stirnseite des Modulrahmens (15) vorgesehene Positioniersystem (43) so ausgebildet ist, dass zwischen dem Modulrahmen (15) und dem Rahmen des Längsreckwerks eine axiale Ausgleichsbewegung in Längsrichtung der auswechselbaren Baueinheit (21) durchführbar ist.

10. Längsreckwerk nach Anspruch 9, **dadurch gekennzeichnet, dass** das eine an der einen Stirnseite des Modulrahmens (15) vorgesehene Positioniersystem (41) kegel- oder kegelstumpfförmig ausgebildet ist, und dass das an der gegenüberliegenden Stirnseite des Modulrahmens (15) vorgesehene Positioniersystem (43) trapezförmig gestaltet ist und mit zwei dazu seitlichen Seitenbegrenzungen oder Seitenstegen (47) zusammenwirkt.

11. Längsreckwerk nach einem der Ansprüche 1 bis 10, **dadurch gekennzeichnet, dass** an der auszuwechselnden Baueinheit (21) eine Schnittstelle zum Anschluss eines von einem flüssigen oder gasförmigen Heizmedium durchströmbaren Verrohrungssystems und/oder eine Schnittstelle zum Anschluss von Pneumatikleitungen und/oder eine Schnittstelle zum Anschluss von elektrischen Leitungen ausgebildet ist, und dass die jeweiligen Schnittstellen vorzugsweise Schnell-Koppeleinrichtungen zum Anschluss und zur Demontage umfassen.

12. Längsreckwerk nach Anspruch 1, **dadurch gekennzeichnet, dass** die Bereithalteposition (D) und/oder die Bereithaltungsstation (19) räumlich neben dem Längsreckwerk vorgesehen ist, und zwar bezogen auf die Längsrichtung des Längsreckwerks oder die Abzugsrichtung (9) vor oder hinter dem Längsreckwerk oder seitlich vom Längsreckwerk.

13. Verfahren zum Austausch einer einem Verschleiß ausgesetzten Baueinheit (21) in einem Längsreckwerk, **dadurch gekennzeichnet, dass**
- ein Längsreckwerk nach zumindest einem der Ansprüche 1 bis 10 verwendet wird, welches neben einer Einbau- oder Betriebsposition (A) für die auszuwechselnde Baueinheit (21) noch eine Breithalteposition (D) und/oder Breithaltungsstation (19) umfasst, an der eine weitere Baueinheit (21) bereitgehalten wird, und
- dass die verwendete Breithaltungsposition (D) und/oder die Breithaltungsstation (19) so in Bezug auf das Längsreckwerk angeordnet und/oder ausgestaltet ist, dass die an dieser Breithalteposition (D) und/oder Breithaltungsstation (19) bereitgestellte weitere Baueinheit (21) schon vor dem Einbau an der Betriebsposition (A) auf Betriebstemperatur oder zumindest auf eine Vorwärmtemperatur gebracht ist oder gebracht wird, die höher oder um weniger als 30°C niedriger ist als die Betriebstemperatur.

## Claims

1. A longitudinal stretching unit, in particular for longitudinal stretching of a plastics film having the following features:
- the longitudinal stretching unit comprises a plurality of rollers (5) arranged next to one another in the pull-off direction (9) of a plastics film (F),
- a plurality of the rollers (5) is part of a preheating station (V),
- the longitudinal stretching unit further comprises at least one assembly (21) exposed to wear,
- the assembly (21) is arranged replaceably in the longitudinal stretching unit and can be removed for this purpose and replaced by another assembly (21),
**characterised by** the following further features:
- the longitudinal stretching unit also comprises, in addition to the installation position or operating position (A) for the assembly (21) to be replaced, a standby position (D) and/or standby station (19) at which a further assembly (21) is kept on standby, and
- the standby position (D) and/or the standby station (19) is arranged and/or configured in relation to the longitudinal stretching unit such that the further assembly (21) provided at this standby position (D) and/or standby station (19), already before the installation at the operating position (A), is brought or can be brought to operating temperature or at least to a preheating temperature that is higher or less than 30°C lower than operating temperature.

2. The longitudinal stretching unit according to claim 1, **characterised in that**
the standby position (D) and/or the standby station (19) is provided on the longitudinal stretching unit, namely in a region which is higher than the rollers (5), preferably in the region of the preheating zone (V).

3. The longitudinal stretching unit according to claim 1 or 2, **characterised in that**
the standby position (D) and/or the standby station (19) in the preheating station (VH) is provided above the heated rollers (5) provided here.

4. The longitudinal stretching unit according to claim 1, **characterised in that**
the standby position (D) and/or the standby station (19) for a next assembly (21) to be used is provided laterally to the longitudinal stretching unit, and **in that** the assembly (21) provided is joined via heating piping to the heating pipe system for heating the rollers (5) in the preheating zone (V) and connected thereto.

5. The longitudinal stretching unit according to claim 1, 2 or 3, **characterised in that**
the assembly (21) provided above the longitudinal stretching unit in the standby position (D) and/or the standby station (19) is joined via heating piping to the heating pipe system for heating the rollers (5) in the preheating zone (V) and connected thereto.

6. The longitudinal stretching unit according to any of claims 1 to 5, **characterised in that,**
alongside or in addition to the operating position (A) and the standby position (D), an intermediate parking position (B) is provided in which an assembly (21), which is at first located in the operating position (A) and then removed, can be temporarily positioned.

7. The longitudinal stretching unit according to claim 6, **characterised in that**
the intermediate parking position (D) is provided above the longitudinal stretching unit, namely
a) with reference to the pull-off direction (9) of the plastics film (F) in a position downstream of the operating position (A) if the ready position (D) is arranged upstream of the operating position (A) with reference to the pull-off direction (9) of the plastics film (F), or
b) with reference to the pull-off direction (9) of the plastics film (F) in a position upstream of the operating position (A) if the ready position (D) is arranged downstream of the operating position (A) with reference to the pull-off direction (9) of the plastics film (F).

8. The longitudinal stretching unit according to any of claims 1 to 7, **characterised in that**
the assembly (21) comprises a module frame (15) which is positionable by means of a positioning system (41, 43) in the longitudinal stretching unit at least in the operating position (A) and/or at the ready position (D) and/or the intermediate parking position (B).

9. The longitudinal stretching unit according to claim 8, **characterised in that**
the positioning system (41) on one of the two end faces of the module frame (15) is designed in such a way that the module frame (15) is pivotable at least at a partial angle about an axis oriented perpendicular to the pull-off plane of the plastics film (F), and **in that** the positioning system (43) provided on the opposite end face of the module frame (15) is designed such that an axial compensation movement in the longitudinal direction of the replaceable assembly (21) can be carried out between the module frame (15) and the frame of the longitudinal stretching unit.

10. The longitudinal stretching unit according to claim 9, **characterised in that**
the one positioning system (41) provided on one end face of the module frame (15) is conical or truncated cone-shaped, and **in that** the positioning system (43) provided on the opposite end face of the module frame (15) is trapezoidal in design and interacts with two side borders or side webs (47).

11. The longitudinal stretching unit according to any of claims 1 to 10, **characterised in that**
an interface for connecting a piping system through which a liquid or gaseous heating medium can flow and/or an interface for connecting pneumatic lines and/or an interface for connecting electrical lines is formed on the assembly (21) to be replaced, and **in that** the respective interfaces preferably comprise quick coupling devices for connection and disassembly.

12. The longitudinal stretching unit according to claim 1, **characterised in that**
the standby position (D) and/or the standby station (19) is provided physically next to the longitudinal stretching unit, namely with reference to the longitudinal direction of the longitudinal stretching unit or the pull-off direction (9) in front of or behind the longitudinal stretching unit or to the side of the longitudinal stretching unit.

13. A method for replacing an assembly (21) exposed to wear in a longitudinal stretching unit, **characterised in that**
- a longitudinal stretching unit according to at least one of claims 1 to 10 is used which comprises, in addition to an installation position or operating position (A) for the assembly (21) to be replaced, a standby position (D) and/or standby station (19) at which a further assembly (21) is kept on standby, and
- **in that** the standby position (D) and/or the standby station (19) used is arranged and/or configured in relation to the longitudinal stretching unit such that the further assembly (21) provided at this standby position (D) and/or standby station (19), already before the installation at the operating position (A), is brought or will be brought to operating temperature, or at least to a preheating temperature that is higher or less than 30°C lower than operating temperature.

## Revendications

1. Système d'étirage longitudinal, en particulier, permettant d'étirer un film de matière plastique, avec les propriétés suivantes :
- le système d'étirage longitudinal comprend une multiplicité de rouleaux (5) disposés les uns à côté des autres dans la direction d'étirage (9) d'un film en matière plastique (F),
- plusieurs parmi les rouleaux (5) font partie d'un poste de préchauffage (V),
- le système d'étirage longitudinal comprend en outre au moins un composant (21) soumis à de l'usure,
- le composant (21) est disposé, échangeable, dans le système d'étirage longitudinal et est ainsi démontable, et peut être remplacé par un autre composant (21),
**caractérisé par** les autres caractéristiques suivantes :
- le système d'étirage longitudinal comprend, en plus de la position de montage ou de fonctionnement (A) pour le composant (21) à échanger, une position de disponibilité (D) et/ou un poste de mise à disposition (19), où un autre composant (21) est mis à disposition, et
- la position de disponibilité (D), et/ou le poste de mise à disposition (19), est disposé et/ou conçu de telle manière par rapport au système d'étirage longitudinal que l'autre composant (21) mis à disposition au niveau de cette position de disponibilité (D), et/ou de ce poste de mise à disposition (19), est mis ou peut être mis à une température de préchauffage déjà avant le montage sur la position de fonctionnement (A), qui est supérieure ou inférieure de moins de 30 °C à la température de fonctionnement.

2. Système d'étirage longitudinal selon la revendication 1, **caractérisé en ce que** la position de disponibilité (D), et/ou le poste de mise à disposition (19), sont prévus sur le système d'étirage longitudinal, et en l'occurrence dans une région qui se situe plus haut que les rouleaux (5), de préférence dans la région de la zone de préchauffage (V).

3. Système d'étirage longitudinal selon la revendication 1 ou la revendication 2, **caractérisé en ce que** la position de disponibilité (D), et/ou le poste de mise à disposition (19), sont prévus dans le poste de préchauffage (VH) au-dessus des rouleaux (5) préchauffés prévus à cet endroit.

4. Système d'étirage longitudinal selon la revendication 1, **caractérisé en ce que** la position de disponibilité (D), et/ou le poste de mise à disposition (19), pour le prochain composant (21) à employer, sont prévus latéralement par rapport au système d'étirage longitudinal et que le composant (21) mis à disposition est relié avec le système de tuyaux de préchauffage par le biais d'une tuyauterie de chauffage pour le préchauffage des rouleaux (5) dans la zone de préchauffage (V) et y est raccordé.

5. Système d'étirage longitudinal selon la revendication 1, la revendication 2 ou la revendication 3, **caractérisé en ce que** le composant (21) disponible au-dessus du système d'étirage longitudinal dans la position de disponibilité (D), et/ou le poste de mise à disposition (19), est relié avec le système de tuyaux de préchauffage pour le préchauffage des rouleaux (5) dans la zone de préchauffage (V) par le biais d'une tuyauterie de chauffage ou y est raccordé.

6. Système d'étirage longitudinal selon l'une des revendications 1 à 5, **caractérisé en ce qu'**une position de stockage intermédiaire (B) est prévue à côté ou en complément à la position de fonctionnement (A) et à la position de disponibilité (D), dans laquelle un composant (21) se trouvant d'abord dans la position de fonctionnement (A) et ensuite consolidé peut être positionné de manière intermédiaire.

7. Système d'étirage longitudinal selon la revendication 6, **caractérisé en ce que** la position de stockage intermédiaire (D) est prévue au-dessus du système d'étirage longitudinal, et en l'occurrence
a) par rapport à la direction d'étirage (9) du film de matière plastique (F), est disposée dans une position derrière la position de fonctionnement (A) lorsque la position de disponibilité (D) est disposée avant la direction d'étirage (9) du film de matière plastique (F) par rapport à la position de fonctionnement (A),
b) par rapport à la direction d'étirage (9) du film de matière plastique (F), est disposée dans une position avant la position de fonctionnement (A) lorsque la position de disponibilité (D) est disposée après la direction d'étirage (9) du film de matière plastique (F) par rapport à la position de fonctionnement (A).

8. Système d'étirage longitudinal selon l'une des revendications 1 à 7, **caractérisé en ce que** le composant (21) comprend un châssis de module (15) qui peut être positionné au moyen d'un système de positionnement (41, 43) dans le système d'étirage longitudinal au moins dans la position de fonctionnement (A) et/ou dans la position de disponibilité (D) et/ou dans la position de stockage intermédiaire (B).

9. Système d'étirage longitudinal selon la revendication 8, **caractérisé en ce que** le système de positionnement (41) est conçu au niveau d'une des deux faces frontales du châssis de module (15) de telle manière que le châssis de module (15) puisse être pivoté au moins d'un angle partiel autour d'un axe orienté perpendiculairement par rapport au plan d'étirage du film en matière plastique (F) et que le système de positionnement (43) prévu sur la face frontale située à l'opposé du châssis de module (15) est conçu de telle manière qu'un déplacement compensatoire axial dans la direction longitudinale du composant (21) échangeable puisse être exécuté entre le châssis de module (15) et le châssis du système d'étirage longitudinal.

10. Système d'étirage longitudinal selon la revendication 9, **caractérisé en ce qu'**un système de positionnement (41) prévu sur une face frontale du châssis de module (15) est conçu sous la forme d'un cône ou d'un cône tronqué et que le système de positionnement (43) prévu sur la face frontale du châssis de module (15) à l'opposé est conçu en forme de trapèze et agit conjointement avec deux limites latérales ou barres latérales (47) par rapport à celui-ci.

11. Système d'étirage longitudinal selon l'une des revendications 1 à 10, **caractérisé en ce qu'**une interface est conçue sur le composant (21) à échanger pour le raccordement d'un système de tuyauterie pouvant être traversé par un milieu chauffant sous forme liquide ou gazeuse, et/ou une interface pour le raccordement de conduites pneumatiques, et/ou une interface pour le raccordement de lignes électriques, et que les interfaces respectives comprennent de préférence des dispositifs de couplage rapides pour le raccordement et le démontage.

12. Système d'étirage longitudinal selon la revendication 1, **caractérisé en ce que** la position de disponibilité (D), et/ou le poste de mise à disposition (19), sont prévus dans l'espace à côté du système d'étirage longitudinal, et en l'occurrence, par rapport à la direction longitudinale du système d'étirage longitudinal (9), avant ou après le système d'étirage longitudinal, ou latéralement par rapport au système d'étirage longitudinal (9).

13. Procédé de remplacement d'un composant (21) soumis à de l'usure dans un système d'étirage longitudinal, **caractérisé en ce**
- **qu'**un système d'étirage longitudinal selon au moins une des revendications 1 à 10 est employé, lequel comprend, en plus de la position de montage ou de fonctionnement (A) pour le composant (21) à remplacer, une position de disponibilité (D) et/ou un poste de mise à disposition (19), où un autre composant (21) est mis à disposition, et
- **que** la position de disponibilité (D) employée, et/ou le poste de mise à disposition (19) est disposé, et/ou conçu de telle manière par rapport au système d'étirage longitudinal que l'autre composant (21) mis à disposition au niveau de cette position de disponibilité (D), et/ou de ce poste de mise à disposition, est mis ou peut être mis à une température préchauffage déjà avant le montage sur la position de fonctionnement (A), qui est supérieure ou inférieure de moins de 30 °C à la température de fonctionnement.
